# EUROPÄISCHE PATENTSCHRIFT

(11) **EP 4 422 954 B1**
(45) Veröffentlichungstag und Bekanntmachung des Hinweises auf die Patenterteilung: **23.09.2026**
(21) Anmeldenummer: 22797367.4
(22) Anmeldetag: 30.09.2022
(51) Int. Cl.: B61B 10/00, E01B 7/18, E01B 25/28, E01B 25/00

(54) **SCHIENEN-FLURFÖRDER-SYSTEM UND VERFAHREN ZUM BETREIBEN EINES SCHIENEN-FLURFÖRDER-SYSTEMS**
RAIL-TYPE FLOOR CONVEYOR SYSTEM AND METHOD FOR OPERATING A RAIL-TYPE FLOOR CONVEYOR SYSTEM
SYSTÈME DE CONVOYEUR AU SOL DE TYPE À RAIL ET PROCÉDÉ DE FONCTIONNEMENT D'UN SYSTÈME DE CONVOYEUR AU SOL DE TYPE À RAIL

(30) Priorität: 27.10.2021 DE 102021005342
(43) Veröffentlichungstag der Anmeldung: 04.09.2024
(73) Patentinhaber: Siempelkamp Transport Systems GmbH, 33758 Schloss Holte-Stukenbrock (DE)
(72) Erfinder: SCHAFFRINSKI, Dominik, 32756 Detmold (DE); REHLING, Stefan, 31675 Bückeburg (DE); BÜLLESBACH, Tim, 33824 Werther (DE); OSTENDORF, Markus, 33104 Paderborn (DE); REMPEL, Juri, 33415 Verl (DE); SCHARTNER, Tobias, 33378 Rheda-Wiedenbrück (DE); GÖTTING, Alexandr, 33859 Bielefeld (DE); KUHLEMANN, Fabian, 33189 Schlangen (DE); BENTRUP, Michael, 33803 Steinhagen (DE)
(74) Vertreter: Ter Meer Steinmeister & Partner
(86) Internationale Anmeldenummer: PCT/EP2022/077284
(87) Internationale Veröffentlichungsnummer: WO 2023/072527

(56) Entgegenhaltungen:
- EP-A1- 0 001 638
- EP-A2- 0 184 218
- DE-A1- 102016 005 635
- DE-A1- 102017 001 349
- GB-A- 1 272 263

## Beschreibung

Die Erfindung betrifft ein Schienen-Flurförderer-System für Flurförderer mit wenigstens zwei aufeinander zulaufenden Schienenpaaren unterschiedlicher Laufrichtung, und
mindestens vier im Kreuzungsbereich des ersten und des zweiten Schienenpaars angeordneten drehbar gelagerten Stütztellern, auf denen Räder eines Flurförderers von einer ersten in eine zweite Laufrichtung schwenk- oder drehbar sind, und
wenigstens einem Flurförderer, der mindestens vier um eine vertikale Achse drehbare Radkassetten mit jeweils wenigstens einem mit den Schienen in Kontakt stehenden Rad aufweist, wobei
   - das Rad eine Umfangskontur aufweist, die wenigstens einem Profil einer Schiene eines Schienenpaars komplementär ist, so dass auch Querkräfte auf den Flurförderer von dem Schienenpaar aufnehmbar sind, sowie
   - eine mit dem Flurförderer verbundene Radkassetten-Drehantriebsanordnung vorgesehen ist, die in der Lage ist, die Radkassetten auf den Stütztellern um ihre vertikale Achse zu drehen.

Die Erfindung betrifft ferner ein Verfahren zum Betreiben eines genannten Schienen-Flurförderer-Systems bei einem Richtungswechsel eines Flurförderers von einem ersten Schienenpaar auf ein kreuzendes zweites Schienenpaar mit Hilfe der Drehung von Radkassetten, die über eine Drehachse am Flurförderer gelagert sind, durch eine Radkassetten-Drehantriebsanordnung.

Bei den hier angesprochenen Schienen(paaren) handelt es sich in erster Linie, aber nicht einschränkend, um die von der Anmelderin vertriebenen Schienen gemäß der DE 43 18 383 C1 oder der WO 2014/032699 A1. Diese Art von Rundschienen hat sich in der Praxis bestens bewährt, weil sie einfach aufgebaut und somit leicht herstellbar sind. Außerdem kann über das Rundprofil ein Schienen-Flurförderer mit konkaven Radauflageflächen sicher geführt werden. Ein weiterer Vorteil für Fabrikationshallen besteht darin, dass die Schiene nahezu bündig mit dem Fußboden verlegt werden kann, so dass andere Fahrzeuge in ihrer Bewegungsfreiheit nicht eingeschränkt sind. Im Gegensatz zu U-förmigen Schienen, in denen die Räder der Flurförderer laufen, ist die Verschmutzungsgefahr der Schienen deutlich verringert.

In der Regel wird ein Flurförderer auf zwei parallelen Schienen geführt und die Erfindung ist in diesem Zustand erläutert. Jedoch sollen auch mehr als zwei parallele Schienen, beispielsweise wenn die Last des Flurförderers zu groß wird oder der Abstand der Räder zu groß würde, von der Erfindung mit erfasst sein.

Aus der DE 10 2017 001 349 A1 der Anmelderin sind verschiedene Weichensysteme bekannt. Man findet beispielsweise Stützteller, auf denen ein Flurförderer mit allen Rädern steht und in eine weiterführende Richtung gedreht werden kann. Es sind aber auch die als "Quadroweiche" benannten Weichen bekannt. Es handelt sich um kleinere gelagerte Stützteller mit kreuzförmig eingelassenen Führungen für die Räder der Flurförderer. Der Durchmesser der Stützteller ist so groß, dass jeweils ein Rad oder ggf. ein kurzer, gemeinsam zu drehender Radsatz aus 2-3 Rädern darauf Platz findet. Für die vorgesehene Richtungsänderung des Flurförderers werden demnach nur die Räder um eine vertikale Achse gedreht und auf den kreuzenden Schienen weitergeleitet. Damit wird der Flurförderer quer zu seiner ursprünglichen Fahrtrichtung verfahren. Diese Weichen können dabei selbst angetrieben oder aber auch passiv sein und sich erst durch die Initiierung der Drehung der Wagenräder drehen.

Im letztgenannten Fall ist jeder Stützteller in der Regel entweder mit einem sich kreuzenden Schienenprofil ausgestattet, so dass die Räder des Flurförderers übergangslos geführt von den Schienen auf den Stützteller rollen. Dabei kann das Schienenprofil auf dem Stützteller beispielsweise die Fortsetzung der in der Halle verwendeten Rundschiene sein, oder aber eine Nute, in die genau die Radbreite hineinpasst und die das Rad seitlich führt. Wenn sich die Räder oder die Radkassetten des Flurförderers unterstützt von einer Radkassetten-Drehantriebsanordnung am Flurförderer selbst von der ersten Laufrichtung in die zweite Laufrichtung drehen, so wird der Stützteller über die seitliche Stabilisierung der Räder mitgedreht.

Dieses Prinzip funktioniert in der Regel sehr gut, aber eine genaue Positionierung der Stützteller im Raum und auch zueinander ist dabei für die Funktion von essenzieller Bedeutung. Ein hin und wieder auftretendes Problem ist dabei, dass die Stützteller durch äußere Einflüsse, beispielsweise durch das Überfahren mit einem Gabelstapler, derart verdreht werden, dass die Räder nicht mehr exakt auf das auf dem Stützteller vorhandene Schienenprofil auffahren können. Dies kann dazu führen, dass der Richtungswechsel des Flurförderers misslingt.

EP 0184 218 A2 beschreibt eine Vorrichtung zum Umschalten der Laufrichtung eines Laufelements, umfassend mehrere Schienenpaare mit Laufflächen und Nuten, die sich in derselben Ebene kreuzen und zur Führung der Laufräder dienen. Die Laufräder sind mit einer Lauffläche und einem Flansch ausgestattet, welcher in die Nut der Schienen eingreift. An den Kreuzungspunkten der Schienen befinden sich Drehteller mit diametralen Nuten, die eine gleichmäßige Richtungsänderung der Laufräder ermöglichen.

DE 10 2016 005635 beschreibt ein Schienensystem mit mindestens einem Schienen-Flurförderer, der konkav ausgekehlte Räder hat. Die Schienen besitzen einen konvexen Oberflächenabschnitt, der in die Auskehlung der Räder eintaucht, um eine stabile Führung zu ermöglichen. Eine senk-recht drehbare Weiche erlaubt es, die Räder mithilfe von Antrieben oder manuell von der Schiene auf die Weiche zu bewegen. Die Räder verfügen über zwei separate, ringförmige Auflagelinien, eine für die Schiene und eine für die Weiche.

GB 1272 263 A beschreibt ein Förderbandsystem mit Schienen und einem beweglichen Träger, der entlang der Schienen durch Linearmotoren bewegt wird und auf schwenkbaren Lenkrollen mit zylindrischen Auflageflächen und einem mittigen Flansch montiert ist. Der Flansch greift in einen Zwischenraum der Schiene, während die zylindrischen Flächen das Gewicht des Trägers auf den Schienen tragen. An Übergangsstellen haben die Rollen nur punktuellen Kontakt über die Flansche, sodass der Träger rechtwinklig zur ursprünglichen Bewegungsrichtung bewegt werden kann.

EP 0 001 638 A1 beschreibt eine Standbahnanlage für schienengebundene Transport-Paletten mit Rädern, welche um eine in der Palette gelagerte senkrechte Achse drehbar sind, und deren Stand-bahnen sich in beliebigen Winkeln kreuzen, dadurch gekennzeichnet, dass in den vier Kreuzungs-punkten der beiden, einander schneidenden Schienen jeder Standbahn ein beiden gemeinsames, um eine senkrechte Achse drehbares Schienenstück für die Aufnahme je eines Rades der Palette vorgesehen ist.

Es ist deshalb die Aufgabe der Erfindung, einen Richtungswechsel eines Flurförderers in einem Schienen-Flurförderer-System funktionssicherer zu gestalten.

Die Aufgabe wird hinsichtlich des Schienen-Flurförderer-Systems mit den Merkmalen des Anspruchs 1 gelöst.

Überraschend hat sich gezeigt, dass ein Schienenprofil auf den Stütztellern nicht notwendig ist, um bei der Drehung einer Radkassette den Stützteller sicher mitzudrehen. Die Erfinder haben in umfänglichen Versuchen erkannt, dass die Haftreibung, die zwischen den Rädern und der Stütztelleroberfläche herrscht, ausreicht. um den Stützteller beim Richtungswechsel der Räder bzw. Radkassetten mitzudrehen. Insbesondere wenn Radkassetten vorgesehen sind, die wenigstens zwei Räder aufweisen und die senkrechte Drehachse der Kassette genau zwischen den beiden Rädern liegt, ist ein "Mitdrehen" des Stütztellers bei einer Drehung der Radkassette mit der beispielhaften Haftreibung einer einfachen Stahl-Stahl-Paarung von Radumfang und Stütztelleroberfläche sichergestellt. Auf dem kurzen Transportstück in einer Laufrichtung allein auf dem Stützteller, kann von dem Schienenprofil in der Halle kommend, welches eine seitliche Führung der Räder des Flurförderers gewährleistet, auf eine derartige Führung verzichtet werden, ohne dass es zu Problemen kommt.

In besonders bevorzugter Ausführungsform weist der Stützteller sogar eine ebene Oberfläche auf.

Damit wird vollständig verhindert, dass eine unabsichtliche Drehung eines Stütztellers durch äußere Einflüsse einen negativen Effekt auf den Richtungswechsel der Räder ausübt.

Es ist günstig, wenn zwischen dem Außenumfang und der Oberfläche des Stütztellers ein Reibungskoeffizient für die Haftreibung in Höhe von mehr als 0,07, besonders bevorzugt von mehr als 0,13 vorliegt.

Aus der Materialpaarung und dem bekannten Gewicht des Flurförderers lässt sich der Mindestwert des vorliegenden Reibungskoeffizienten leicht berechnen. Mit einem Reibungskoeffizienten in der genannten Größenordnung ist ein seitliches Verrutschen der Räder bei der Drehung zum Richtungswechsel auf dem Stützteller auszuschließen. Der Reibungskoeffizient lässt sich gegebenenfalls durch Beschichtungen mit hoher Reibung oder durch Oberflächenbearbeitung positiv beeinflussen.

Vorzugsweise weist das Schienen-Flurförderer-System wenigstens einen Sensor zur Positionserkennung eines Flurförderers im Kreuzungsbereich oder eines Rades auf einem Stützteller auf.

Ein solcher Sensor kann beispielsweise optisch oder induktiv Messungen vornehmen. Bevorzugt findet eine Überwachung aller Räder statt, damit sichergestellt ist, dass alle Räder auf Stütztellern stehen, bevor ein Richtungswechsel eingeleitet wird.

Mit Vorteil ist vorgesehen, dass ein Motor der Radkassetten-Drehantriebsanordnung erst dann aktivierbar ist, wenn wenigstens ein mit dem Sensor gekoppeltes Erfassungsgerät ein Signal an eine Steuerung weitergegeben hat.

Damit werden Fehlfunktionen hinsichtlich einer Richtungsänderung des Flurförderers, ohne dass die Räder auf einem Stützteller stehen, ausgeschlossen.

Vorzugsweise sind über die Radkassetten-Drehantriebsanordnung mindestens zwei Radkassetten synchron dreh- oder schwenkbar.

Wenn zwei oder sogar alle Radkassetten gleichzeitig drehbar sind, wird der Richtungswechsel besonders schnell vollzogen. Außerdem kann die Radkassetten-Drehantriebsanordnung einfacher aufgebaut sein und benötigt weniger Motoren, als wenn jede Radkassette einen eigenen einzelnen Drehantrieb hat. Aber diese Möglichkeit mit Einzelantrieben soll auch von der Erfindung erfasst sein.

Es eignet sich ein mit einem Motor verbundenes Getriebe, das die Drehung der Radkassetten von einer Laufrichtung in eine andere bei mindestens zwei Radkassetten, ggf. sogar bei allen Radkassetten synchron vornehmen kann. In Frage kommen hier beispielsweise Schneckengetriebe, Zahnstangengetriebe, Koppelgetriebe oder Zug- oder Druckmittelgetriebe.

Als besonders effektiv hat sich in Versuchen ein Getriebe herausgestellt, das ein Zug- oder Druckelement aufweist, welches durch einen Motor bewegbar ist, und mit einem Hebel an der Radkassette verbunden ist. Damit hat der Flurförderer einen relativ einfachen und dennoch funktionalen Aufbau. Als Motor eignen sich insbesondere pneumatische Stellzylinder oder Elektromotoren mit einem Zahn- oder Gewindestangengetriebe. Die Drehung der Radkassette ist dann auf einfachem Wege analog zu einer Schub Kurbel drehbar.

Bevorzugt weist der Flurförderer eine auf wenigstens ein Rad einer Radkassette wirkende Fahrantriebsanordnung auf.

Dabei sollte wenigstens ein Rad pro Schiene angetrieben sein. Das hat nicht nur den Vorteil, dass der Flurförderer selbstständig ohne manuellen Eingriff verfahrbar ist, sondern auch, dass die Räder des Flurförderers genau auf den Drehtellern ausgerichtet werden können.

Dabei ist es vorteilhaft, wenn alle Räder einer Radkassette in gleicher Weise angetrieben werden können, d. h., dass die Antriebskraft über die Drehung aller Räder einer Radkassette synchronisierbar ist.

Eine solche Kopplung wird in dieser Erfindung am einfachsten über einen, die Radachsen verbindenden Zahn- oder Keilriemen gelöst. Im Rahmen der Erfindung sind aber auch Zahnradverbindungen oder Ähnliches vorstellbar.

Es ist von Vorteil, wenn die Drehung der Radkassetten über die Radkassetten-Drehantriebsanordnung am Flurförderer erfolgen kann und sie deshalb über einen aufladbaren Energiespeicher mit Energie versorgbar ist. Das gleiche gilt gegebenenfalls auch für eine mögliche Energieversorgung eines Fahrantriebs des Flurförderers.

Man verzichtet in diesem Fall auf Schleifkontakte oder dergleichen zur Energiezufuhr der Antriebsanordnungen und wählt den heute gangbaren Weg über aufladbare Energiespeicher. In der Regel handelt es sich um moderne Akkumulatoren, die vorzugsweise aufladbar sind.

Dies kann vorzugsweise erfolgen, wenn der Flurförderer an einer Ladestation steht oder über eine induktive Aufladung entlang des Verfahrwegs, wenn sich der Flurförderer bewegt.

Die Aufgabe wird hinsichtlich des Verfahrens zum Betreiben eines Schienen-Flurförderer-Systems gemäß einem der Ansprüche zum Schienen-Flurförder-System bei einem Richtungswechsel eines Flurförderers dadurch gelöst, dass mindestens ein an seiner Oberfläche unprofilierter Stützteller über die Haftreibung eines Rades aufgrund der Drehung der Radkassette um eine vertikale Achse mitgedreht wird.

In diesem Fall ist die Ausgangsstellung des Stütztellers unerheblich. Er kann also durchaus vor dem Befahren mit dem Flurförderer mehrfach gegenüber anderen Stütztellern verstellt worden sein, ohne dass hier die negativen Auswirkungen des Standes der Technik zum Tragen kommen.

Besonders bevorzugt ist dabei, wenn als Paarung zwischen dem Außenumfang des Rades und der Oberfläche des Stütztellers ein Reibungskoeffizient für die Haftreibung in Höhe von mehr als 0,07 und besonders bevorzugt mehr als 0,13 vorgesehen wird.

Dieser Mindestwert ist hinsichtlich der Funktionssicherheit als ausreichend anzusehen. Unter Funktionssicherheit ist in diesem Fall gemeint, dass es zwischen Rad und Stützteller nur zu unwesentlicher oder keiner Gleitreibung kommt, damit es weder am Rad noch auf der Oberfläche des Stütztellers zu nennenswertem Abrieb kommt. Dabei muss jedes Rad von einer Schiene auf den Stützteller kommend auf der kreuzenden Schiene weitergeleitet werden können.

Mit Vorteil wirkt eine mit dem Flurförderer verbundene Fahrantriebsanordnung auf wenigstens ein Rad einer Radkassette, um den Flurförderer in den Kreuzungsbereich und daraus weg zu bewegen.

Der Flurförderer besitzt also einen eigenen Fahrantrieb der möglichst mit einer eigenen Energieversorgung diesen auf den Schienen antreiben kann. Er fährt den Flurförderer exakt mit seinen Radkassetten wie bereits hinsichtlich des Systems beschrieben auf die Stützteller, so dass die Drehachsen von Radkassette und Stützteller fluchten, und stoppt dort. Nach der Drehung der Räder in die Richtung des kreuzenden Schienenpaars kann dieser Fahrantrieb den Flurförderer wieder antreiben.

Im Folgenden wird die Erfindung anhand der darstellenden Zeichnungen erläutert. Als größtenteils dreidimensional dargestellte Figuren zeigen
Fig. 1 einen Kreuzungsbereich des Schienensystems für Schienen-Flurförderer mit drehbaren Stütztellern,
Fig. 2 eine Detailansicht eines Kreuzungsbereichs auf dem lediglich die Radkassetten und die Radkassetten-Drehantriebsanordnungen eines Flurförderers dargestellt sind,
Fig. 3 einen unverkleideten Flurförderer in der Draufsicht in einem Kreuzungsbereich,
Fig. 4 einen nahezu vollverkleideten Flurförderer in der Draufsicht in einem Kreuzungsbereich mit geöffnetem Energiespeicher - und Steuerungseinschub,
Fig. 5 einen Flurförderer von unten,
Fig. 6 a-d den Vorgang der Drehung der Radkassetten in vier unterschiedlichen Drehwinkelstellungen und
Fig. 7 eine schematische Darstellung eines Flurförderers in einer Ladestation in der Draufsicht

Alle Figuren beziehen sich im Wesentlichen auf eine einzige Ausführungsform des Schienen-Flurförderer-Systems. Insofern sind auch alle Radkassetten 8 der dargestellten Flurförderer 6 oder deren Detailansichten mit jeweils zwei Rädern 7 bestückt. Grundsätzlich soll die Erfindung aber auch Radkassetten mit mehr oder weniger Rädern umfassen.

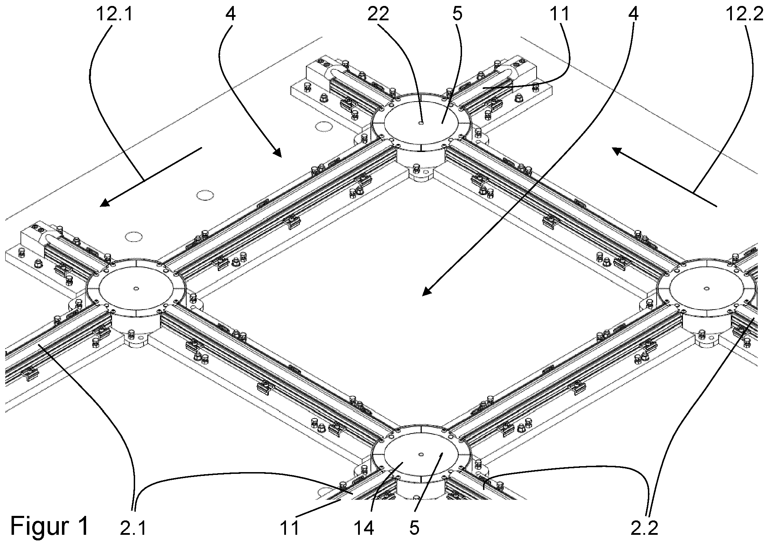

Fig. 1 zeigt die Basis der Erfindung eines Schienen-Flurförderer-Systems, nämlich ein erstes Schienenpaar 2.1 und ein zweites, das erste kreuzende Schienenpaar 2.2 auf dem Flurförderer 6 motorisch oder manuell verfahrbar sind. Zur besseren Darstellbarkeit ist der Hallenboden 15 seitlich der Schienen nicht dargestellt. Er hat seine Oberfläche etwa in Höhe der Schienen- bzw. der Stütztelleroberkante. Beispielhaft sind zwei Laufrichtungen 12.1 und 12.2 durch Pfeile angedeutet. In diese Laufrichtungen müssen die Räder eines Flurförderers ausgerichtet sein. Die Drehung erfolgt dabei auf den in Fig. 1 erkennbaren drehbaren Stütztellern 5, die erfindungsgemäß nicht mit Führungskontur für die Räder versehen sind, sondern deren Drehung lediglich über die Reibung der Räder bei deren motorischer Verdrehung in die jeweilige Laufrichtung erfolgt. Damit wird vermieden, dass ein durch ein Anstoßen an eine Führungskontur für die Räder unabsichtlich verdrehter Stützteller die Radstellungsveränderung in die zweite Laufrichtung behindert. Erst neue Versuche der Erfinder, auf dem Stützteller keine Kontur zur Führung der Räder anzubringen, haben gezeigt, dass man auf derartige "Schienen" auf dem Stützteller unerwartet verzichten kann. Dabei wird ein unabsichtliches Verdrehen der Stützteller weitgehend verhindert, weil sie bevorzugt eine absolut glatte und ebene Oberfläche 14 aufweisen.

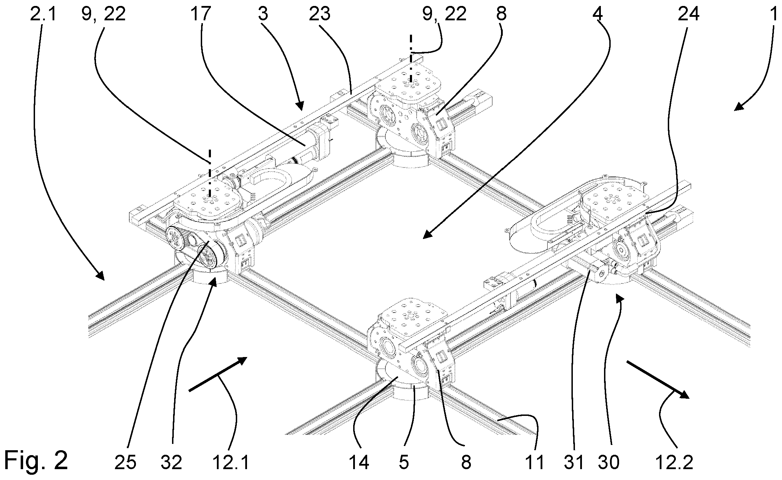

In Fig. 2 erkennt man, wie jeweils zwei Räder 7 einer Radkassette 8 eines erst in den folgenden Figuren dargestellten Flurförderers 6 auf einem drehbar gelagerten Stützteller 5 stehen. Die Drehachse 9 der Radkassette 8 fluchtet dabei mit der Drehachse 22 des Stütztellers.

Jeweils zwei Radkassetten 8 können gemeinsam um ihre Drehachsen 9 gedreht werden. Dazu greift bei beiden an einem Hebel 24 eine Schubstange 23 an, die über einen Motor 17 dieser Radkassetten-Drehantriebsanordnung 3 linear verschiebbar ist. Der Motor 17 ist in diesem Ausführungsbeispiel ein elektrischer Motor mit Lineargetriebe, könnte aber theoretisch auch ein Pneumatikzylinder sein, wenn eine Druckluftversorgung bereitgestellt werden kann. Durch die Längsverschiebung der Schubstange 23 können bei den Radkassetten Drehmöglichkeiten bis 120° realisiert werden.

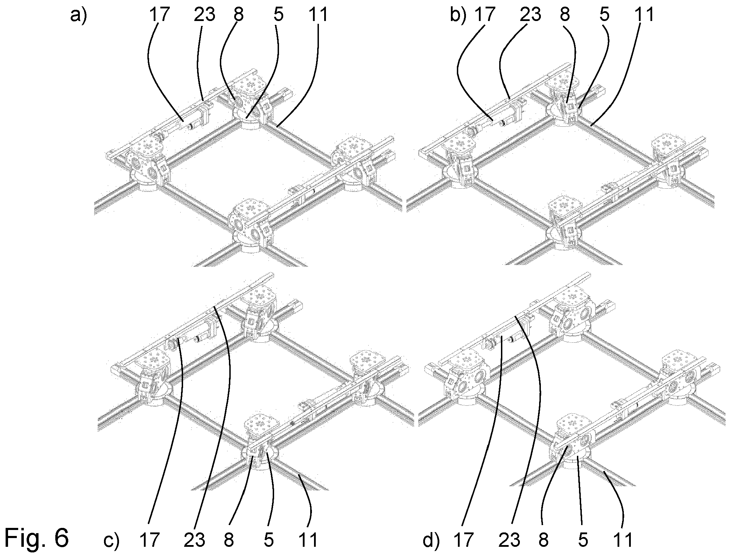

In der Fig. 6 wird der Vorgang der Drehung der Radkassetten 8 über Motor 17 und Schubstange 23 noch detaillierter in vier aufeinander folgenden Zeitabschnitten a) - d) verdeutlicht.

In Fig. 2 erkennt man ferner bereits die Fahrantriebsanordnung 30 für den Flurförderer 6. Sie ist so gestaltet, dass immer auf beiden Schienen mindestens eine Radkassette vorgesehen ist, in der wenigstens ein Rad über einen Motor 31 antreibbar ist. Um beide Räder der Kassette synchron anzutreiben ist zusätzlich eine Synchronisiereinheit 32 vorgesehen. Diese Synchronisiereinheit wird beispielsweise einfach über einen Zahnriemen 25, der die Wellen der Räder 7 verbindet, realisiert.

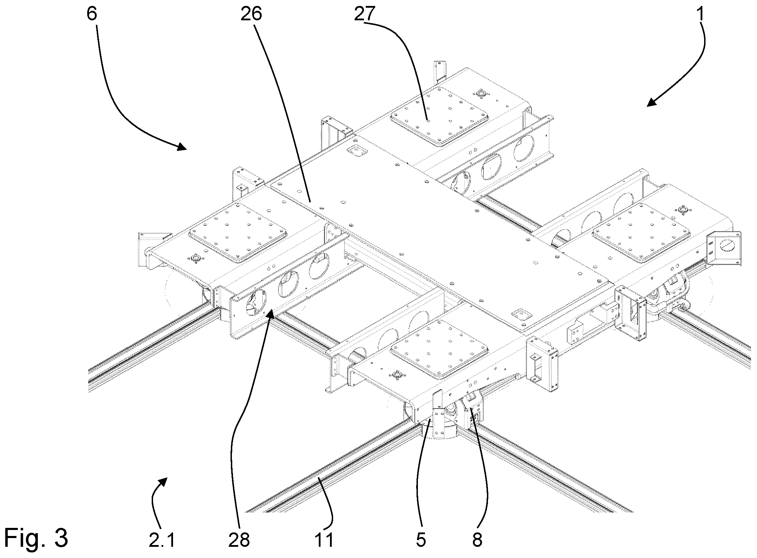

Fig. 3 zeigt die Anordnung des Schienen-Flurförderer-Systems 1 aus Fig. 2 mit der Ergänzung des Fahrgestells 26 des Flurförderers 6. Auch die verstärkten Auflageflächen 27 für die zu transportierenden Güter sind bereits vorgesehen. Erkennbar sind auch bereits integrierte Einschübe 28, die für elektronische Bauteile und den Energiespeicher gedacht sind.

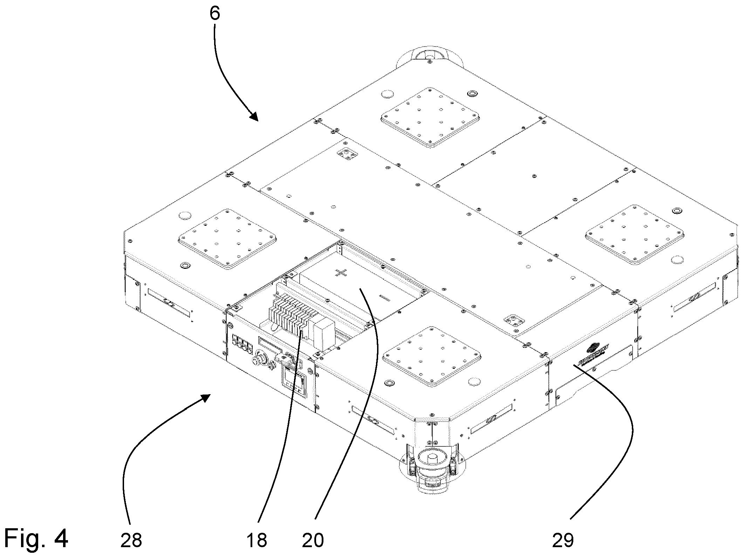

In der Fig. 4 ist die Anordnung noch einmal ergänzt. Das Fahrgestell 26 ist jetzt vollständig mit einer Verkleidung 29 versehen. Einer der Einschübe 28 ist (offen gezeichnet) mit einem Energiespeicher 20 und einem Erfassungsgerät 18 als auswechselbare Kombination bestückt.

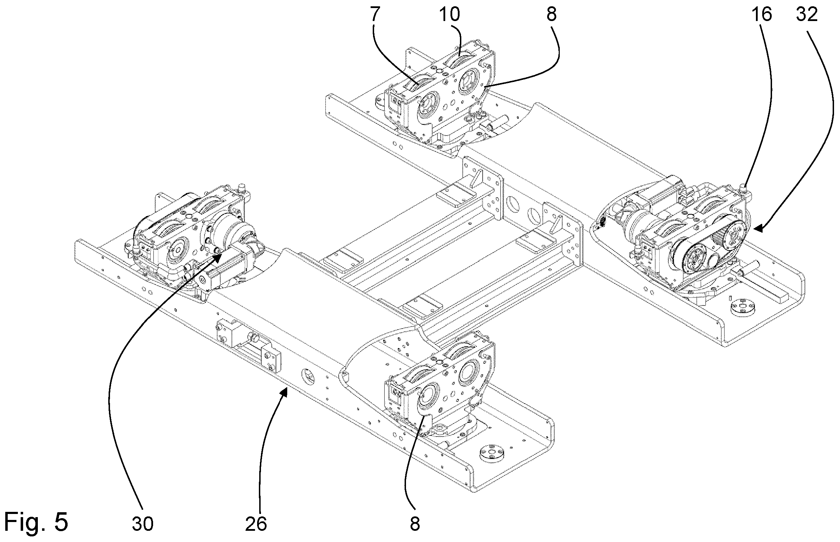

Fig. 5 zeigt das Fahrgestell 26 des Flurförderers 6 von der Unterseite. So ist wesentlich übersichtlicher die Radkassette 8 mit ihren zwei Rädern 7 zu erkennen. Außerdem ist die Umfangskontur 10 des Rades 7 sichtbar. In dem Ausführungsbeispiel handelt es sich um eine konkave Eindellung über den ganzen Umfang, wobei die konkave Form der konvexen Form einer Schiene 11 angepasst ist. Solange der Flurförderer 6 auf den Schienen 11 geführt ist, umschließt das Rad somit zum Teil die Rundschiene und kann auch seitliche Belastungen aufnehmen. Sobald das Rad 7 auf einen Stützteller 5 auffährt, wird es seitlich nicht mehr geführt. Bislang hielt man das für eine Notwendigkeit, aber es zeigt sich mit dem Vorteil einer sichereren Funktionalität, dass die Haftreibung von dem Rad, also speziell der beiden aufliegenden Flanken neben der konkaven Eindellung, auf den nun ebenen und glatten Stützteller ausreicht, um eine zielgerichtete Drehung des Rades in Richtung der kreuzenden Schiene durchführen zu können.

In Fig. 5 ist an der Radkassette 8 auch ein Sensor 16 angedeutet, der beispielsweise induktiv die Position der Radkassette 8 auf einem Stützteller 5 feststellen kann. Sobald die Drehachse 9 der Radkassette 8 und die Drehachse 22 des Stütztellers 5 fluchten, kann ein Erfassungsgerät 18 ein Signal an eine Steuerung 19 weitergeben, die dann die Aktivierung des Drehantriebs der Radkassette erlaubt. Die letztgenannten Merkmale sind in Fig. 6 nicht mehr darstellbar und müssen in Zusammenschau mit anderen Figuren betrachtet werden.

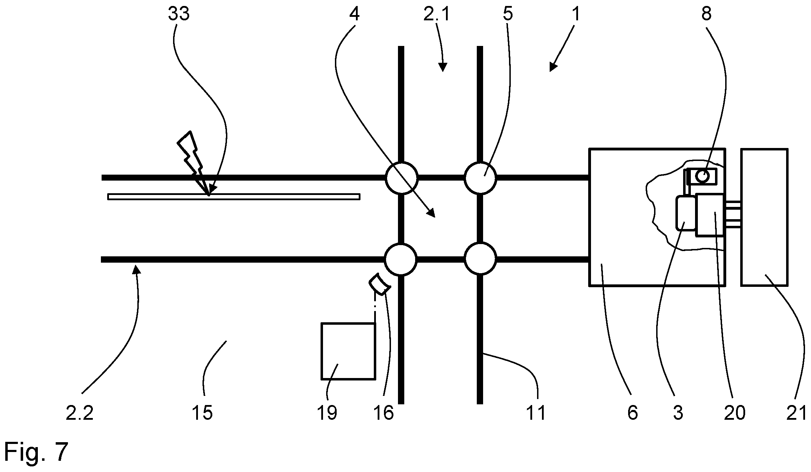

Fig. 7 zeigt letztendlich in grob schematischer Darstellung einen Kreuzungsbereich 4 durch die Schienenpaare 2.1 und 2.2 und entsprechend vier drehbaren Stütztellern 5, auf denen die Radkassetten 8 ihre Richtungsänderung vornehmen können.

Es ist ein aufgeschnittener Flurförderer 6 angedeutet, der neben einer Ladestation 21 parkt und dort seinen Energiespeicher 20 mit Strom versorgen kann. Mit der geladenen Energie kann die Radkassetten-Drehantriebsanordnung 3 und der Motor der Fahrantriebsanordnung 31 betrieben werden.

Als Alternative oder zusätzlich zur Ladestation wäre auch eine Aufladung des Energiespeichers 20 entlang der Schienenabschnitte über eine induktive oder über Schleifkontakte arbeitende Ladeeinheit 33 denkbar.

### Bezugszeichenliste

- 1: Schienen-Flurförderer-System
- 2.1, 2.2: Schienenpaar
- 3: Radkassetten-Drehantriebsanordnung
- 4: Kreuzungsbereich
- 5: Stützteller
- 6: Flurförderer
- 7: Rad
- 8: Radkassette
- 9: Drehachse Radkassette
- 10: Rad-Umfangskontur
- 11: Schiene
- 12.1, 12.2: Laufrichtung
- 14: Ebene Oberfläche
- 15: Hallenboden
- 16: Sensor
- 17: Motor Drehantriebsanordnung
- 18: Erfassungsgerät
- 19: Steuerung
- 20: Energiespeicher
- 21: Ladestation
- 22: Drehachse Stützteller
- 23: Schubstange
- 24: Hebel
- 25: Zahnriemen
- 26: Fahrgestell
- 27: Auflage- bzw. Tragflächen
- 28: Einschub
- 29: Verkleidung
- 30: Fahrantriebsanordnung
- 31: Motor Fahrantriebsanordnung
- 32: Synchronisiereinheit Räder
- 33: Induktive oder über Schleifkontakt arbeitende Ladeeinheit

## Patentansprüche

1. Schienen-Flurförderer-System für Flurförderer mit
wenigstens zwei aufeinander zulaufenden Schienenpaaren (2.1, 2.2) unterschiedlicher Laufrichtung (12.1, 12.2), und
mindestens vier im Kreuzungsbereich (4) des ersten und des zweiten Schienenpaars (2.1, 2.2) angeordneten drehbar gelagerten Stütztellern (5), auf denen Räder (7) eines Flurförderers (6) von einer ersten in eine zweite Laufrichtung (12.1, 12.2) schwenk- oder drehbar sind, und
wenigstens einem Flurförderer (6), der mindestens vier um eine vertikale Achse (9) drehbare Radkassetten (8) mit jeweils wenigstens einem mit den Schienen in Kontakt stehenden Rad (7) aufweist,
wobei
- das Rad (7) eine Umfangskontur (10) aufweist, die wenigstens einem Profil einer Schiene (11) eines Schienenpaars (2.1, 2.2) komplementär ist, so dass auch Querkräfte auf den Flurförderer (6) von dem Schienenpaar (2.1, 2.2) aufnehmbar sind, sowie
- eine mit dem Flurförderer (6) verbundene Radkassetten-Drehantriebsanordnung (3) vorgesehen ist, die in der Lage ist, die Radkassetten (8) auf den Stütztellern (5) um ihre vertikale Achse (9) zu drehen,
**dadurch gekennzeichnet, dass** auf den Stütztellern (5) keine zur Führung der Räder (7) geeignete Profilierung vorgesehen ist,
derart, dass die Stützteller (5) an ihrer Oberfläche unprofiliert sind und zwischen den Rädern (7) und der Stütztelleroberfläche (14) eine Haftreibung herrscht, die ausreicht, die Stützteller (5) beim Richtungswechsel der Räder (7) bzw. Radkassetten (8) um eine vertikale Achse (22) mitzudrehen.

2. Schienen-Flurförderer-System gemäß Anspruch 1, **dadurch gekennzeichnet, dass** die Stützteller eine ebene Oberfläche (14) aufweisen.

3. Schienen-Flurförderer-System gemäß Anspruch 2, **dadurch gekennzeichnet, dass** zwischen dem Außenumfang des Rades (7) und der Oberfläche (14) des Stütztellers (5) ein Reibungskoeffizient für die Haftreibung in Höhe von mehr als 0,07, vorzugsweise mehr als 0,13 vorliegt.

4. Schienen-Flurförderer-System gemäß einem der Ansprüche 1 bis 3, **dadurch gekennzeichnet, dass** es wenigstens einen Sensor (16) zur Positionserkennung eines Flurförderers (6) im Kreuzungsbereich (4) oder eines Rades (7) auf einem Stützteller (5) aufweist.

5. Schienen-Flurförderer-System gemäß Anspruch 4, **dadurch gekennzeichnet, dass** ein Motor (17) der Radkassetten-Drehantriebsanordnung (3) erst dann aktivierbar ist, wenn wenigstens ein mit dem Sensor (16) gekopptes Erfassungsgerät (18) ein Signal an eine Steuerung (19) weitergegeben hat.

6. Schienen-Flurförderer-System gemäß einem der Ansprüche 1 bis 5, **dadurch gekennzeichnet, dass** über die Radkassetten-Drehantriebsanordnung (3) mindestens zwei Radkassetten (8) synchron dreh- oder schwenkbar sind.

7. Schienen-Flurförderer-System gemäß einem der Ansprüche 1 bis 6, **dadurch gekennzeichnet, dass** die Radkassetten-Drehantriebsanordnung (3) ein Getriebe umfasst, das ein Zug- oder Druckelement aufweist, welches durch einen Motor (17) bewegbar ist, und mit einem Hebel an wenigstens einer Radkassette (8) verbunden ist.

8. Schienen-Flurförderer-System gemäß einem der Ansprüche 1 bis 7, **dadurch gekennzeichnet, dass** der Flurförderer eine auf wenigstens ein Rad (7) einer Radkassette (8) wirkende Fahrantriebanordnung aufweist.

9. Schienen-Flurförderer-System gemäß Anspruch 8, **dadurch gekennzeichnet, dass** die Antriebskraft über die Drehung aller Räder (7) einer Radkassette (8) synchronisierbar ist.

10. Schienen-Flurförderer-System nach einem der Ansprüche 1 bis 9, **dadurch gekennzeichnet, dass** die Radkassetten-Drehantriebsanordnung (3) und/oder die Fahrantriebanordnung (30) über einen aufladbaren Energiespeicher (20) am Flurförderer mit Energie versorgbar ist.

11. Schienen-Flurförderer-System nach Anspruch 10, **dadurch gekennzeichnet, dass** der Energiespeicher (20) in einer Ladestation (21) für den Flurförderer (6) ladbar ist.

12. Schienen-Flurförderer-System nach Anspruch 10, **dadurch gekennzeichnet, dass** der Energiespeicher (20) induktiv entlang des Verfahrwegs auf den Schienenpaaren (2.1, 2.2) ladbar ist.

13. Verfahren zum Betreiben eines Schienen-Flurförderer-Systems gemäß einem der Ansprüche 1 bis 12 bei einem Richtungswechsel eines Flurförderers (6) innerhalb eines Kreuzungsbereichs (4) von einem ersten Schienenpaar (2.1) auf ein kreuzendes zweites Schienenpaar (2.2) mit Hilfe der Drehung von Radkassetten (8), die über eine Drehachse (9) am Flurförderer (6) gelagert sind, durch eine Radkassetten-Drehantriebsanordnung (3),
**dadurch gekennzeichnet, dass**
mindestens ein an seiner Oberfläche unprofilierter Stützteller (5) über die Reibung eines Rades (7) aufgrund der Drehung der Radkassette (8) um eine vertikale Achse (22) mitgedreht wird.

14. Verfahren gemäß Anspruch 13, **dadurch gekennzeichnet, dass** als Paarung zwischen dem Außenumfang des Rades (7) und der Oberfläche (14) des Stütztellers (5) ein Reibungskoeffizient für die Haftreibung in Höhe von mehr als 0,07, vorzugsweise mehr als 0,13 vorgesehen wird.

15. Verfahren gemäß Anspruch 13 oder 14, **dadurch gekennzeichnet, dass** eine mit dem Flurförderer (6) verbundene Fahrantriebsanordnung (30) auf wenigstens ein Rad (7) einer Radkassette (8) wirkt, um den Flurförderer (6) in den Kreuzungsbereich (4) und daraus weg zu bewegen.

## Claims

1. Rail-floor conveyor system for floor conveyors, comprising
at least two rail pairs (2.1, 2.2) of different running directions (12.1, 12.2) running towards one another, and
at least four rotatably mounted support plates (5) which are arranged in the intersection region (4) of the first and the second rail pair (2.1, 2.2) and on which wheels (7) of a floor conveyor (6) can be pivoted or rotated from a first into a second running direction (12.1, 12.2), and
at least one floor conveyor (6) which has at least four wheel cassettes (8) which can be rotated about a vertical axis (9) and each have at least one wheel (7) which is in contact with the rails,
wherein
- the wheel (7) has a circumferential contour (10) which is complementary to at least one profile of a rail (11) of a rail pair (2.1, 2.2), with the result that transverse forces on the floor conveyor (6) can also be absorbed by the rail pair (2.1, 2.2), and
- a wheel cassette rotary drive arrangement (3) which is connected to the floor conveyor (6) is provided and is capable of rotating the wheel cassettes (8) on the support plates (5) about their vertical axis (9),
**characterized in that** no profiling which is suitable for guiding the wheels (7) is provided on the support plates (5),
in such a way that the support plates (5) are unprofiled on their surface and there is static friction between the wheels (7) and the support plate surface (14) which is sufficient to rotate the support plates (5) about a vertical axis (22) when the direction of the wheels (7) or wheel cassettes (8) is changed.

2. Rail-floor conveyor system according to Claim 1, **characterized in that** the support plates have a planar surface (14).

3. Rail-floor conveyor system according to Claim 2, **characterized in that** a coefficient of friction for the static friction of more than 0.07, preferably more than 0.13, is present between the outer circumference of the wheel (7) and the surface (14) of the support plate (5).

4. Rail-floor conveyor system according to one of Claims 1 to 3, **characterized in that** it has at least one sensor (16) for detecting the position of a floor conveyor (6) in the intersection region (4) or of a wheel (7) on a support plate (5).

5. Rail-floor conveyor system according to Claim 4, **characterized in that** a motor (17) of the wheel-cassette rotary drive arrangement (3) can be activated only when at least one detection device (18) coupled to the sensor (16) has forwarded a signal to a controller (19).

6. Rail-floor conveyor system according to one of Claims 1 to 5, **characterized in that** at least two wheel cassettes (8) can be rotated or pivoted synchronously via the wheel-cassette rotary drive arrangement (3).

7. Rail-floor conveyor system according to one of Claims 1 to 6, **characterized in that** the wheel-cassette rotary drive arrangement (3) comprises a gear mechanism which has a pulling or pushing element which can be moved by a motor (17) and is connected to a lever on at least one wheel cassette (8).

8. Rail-floor conveyor system according to one of Claims 1 to 7, **characterized in that** the floor conveyor has a driving power arrangement which acts on at least one wheel (7) of a wheel cassette (8).

9. Rail-floor conveyor system according to Claim 8, **characterized in that** the drive force can be synchronized via the rotation of all the wheels (7) of a wheel cassette (8).

10. Rail-floor conveyor system according to one of Claims 1 to 9, **characterized in that** the wheel-cassette rotary drive arrangement (3) and/or the driving power arrangement (30) can be supplied with energy via a rechargeable energy store (20) on the floor conveyor.

11. Rail-floor conveyor system according to Claim 10, **characterized in that** the energy store (20) can be charged in a charging station (21) for the floor conveyor (6).

12. Rail-floor conveyor system according to Claim 10, **characterized in that** the energy store (20) can be charged inductively along the travel path on the rail pairs (2.1, 2.2).

13. Method for operating a rail-floor conveyor system according to one of Claims 1 to 12 in the event of a change of direction of a floor conveyor (6) within an intersection region (4) from a first rail pair (2.1) to an intersecting second rail pair (2.2) with the aid of the rotation of wheel cassettes (8) which are mounted on the floor conveyor (6) via an axis of rotation (9) by means of a wheel-cassette rotary drive arrangement (3),
**characterized in that**
at least one support plate (5) which is unprofiled on its surface is also rotated via the friction of a wheel (7) on account of the rotation of the wheel cassette (8) about a vertical axis (22).

14. Method according to Claim 13, **characterized in that** a coefficient of friction for the static friction of more than 0.07, preferably more than 0.13, is provided as a pairing between the outer circumference of the wheel (7) and the surface (14) of the support plate (5).

15. Method according to Claim 13 or 14, **characterized in that** a driving power arrangement (30) which is connected to the floor conveyor (6) acts on at least one wheel (7) of a wheel cassette (8) in order to move the floor conveyor (6) into the intersection region (4) and away therefrom.

## Revendications

1. Système de convoyeur au sol monté sur rails pour un convoyeur au sol, comportant :
au moins deux paires de rails (2.1, 2.2) convergeant l'une vers l'autre dans différentes directions de déplacement (12.1, 12.2), et
au moins quatre disques de support (5) montés de manière rotative et disposés dans la zone d'intersection (4) des première et seconde paires de rails (2.1, 2.2), sur lesquels des roulettes (7) d'un convoyeur au sol (6) peuvent pivoter ou tourner d'une première direction de déplacement à une seconde direction de déplacement (12.1, 12.2), et
au moins un convoyeur au sol (6) qui comporte au moins quatre cassettes de roulettes (8) pouvant tourner autour d'un axe vertical (9), ayant respectivement au moins une roulette (7) en contact avec les rails,
- la roulette (7) présentant un contour périphérique (10) qui est complémentaire à au moins un profilé d'un rail (11) d'une paire de rails (2.1, 2.2), de sorte que des forces transversales exercées sur le convoyeur au sol (6) peuvent également être absorbées par la paire de rails (2.1, 2.2), et
- un ensemble d'entraînement en rotation de cassettes de roulettes (3) relié au convoyeur au sol (6) étant prévu, lequel ensemble étant capable de faire tourner les cassettes de roulettes (8) sur les disques de support (5) autour de leur axe vertical (9),
**caractérisé en ce que** les disques de support (5) n'ont aucun profilage adapté pour guider les roulettes (7),
de telle sorte que les disques de support (5) ne présentent sur leur surface aucun profilage et qu'il existe un frottement statique entre les roulettes (7) et la surface de disque de support (14) qui est suffisant pour faire tourner conjointement les disques de support (5) autour d'un axe vertical (22) lors du changement de direction des roulettes (7) ou des cassettes de roulettes (8).

2. Système de convoyeur au sol monté sur rails selon la revendication 1, **caractérisé en ce que** les disques de support ont une surface plane (14).

3. Système de convoyeur au sol monté sur rails selon la revendication 2, **caractérisé en ce qu'**il existe un coefficient de frottement pour le frottement statique supérieur à 0,07, de préférence supérieur à 0,13, entre la périphérie extérieure de la roulette (7) et la surface (14) du disque de support (5).

4. Système de convoyeur au sol monté sur rails selon l'une des revendications 1 à 3, **caractérisé en ce qu'**il comporte au moins un capteur (16) pour détecter la position d'un convoyeur au sol (6) dans la zone d'intersection (4) ou d'une roulette (7) sur un disque de support (5).

5. Système de convoyeur au sol monté sur rails selon la revendication 4, **caractérisé en ce qu'**un moteur (17) de l'ensemble d'entraînement en rotation de cassettes de roulettes (3) ne peut être activé que si au moins un appareil de détection (18) couplé au capteur (16) a transmis un signal à une commande (19).

6. Système de convoyeur au sol monté sur rails selon l'une des revendications 1 à 5, **caractérisé en ce qu'**au moins deux cassettes de roulettes (8) peuvent tourner ou pivoter de manière synchrone par l'intermédiaire de l'ensemble d'entraînement en rotation de cassettes de roulettes (3).

7. Système de convoyeur au sol monté sur rails selon l'une des revendications 1 à 6, **caractérisé en ce que** l'ensemble d'entraînement en rotation de cassettes de roulettes (3) comprend un entraînement qui comporte un élément de traction ou de compression qui peut être déplacé par un moteur (17) et est relié à un levier sur au moins une cassette de roulettes (8).

8. Système de convoyeur au sol monté sur rails selon l'une des revendications 1 à 7, **caractérisé en ce que** le convoyeur au sol comporte un ensemble de translation agissant sur au moins une roulette (7) d'une cassette de roulettes (8).

9. Système de convoyeur au sol monté sur rails selon la revendication 8, **caractérisé en ce que** la force d'entraînement peut être synchronisée par la rotation de toutes les roulettes (7) d'une cassette de roulettes (8).

10. Système de convoyeur au sol monté sur rails selon l'une des revendications 1 à 9, **caractérisé en ce que** l'ensemble d'entraînement en rotation de cassettes de roulettes (3) et/ou l'ensemble de translation (30) peut être alimenté en énergie par un accumulateur d'énergie rechargeable (20) sur le convoyeur au sol.

11. Système de convoyeur au sol monté sur rails selon la revendication 10, **caractérisé en ce que** l'accumulateur d'énergie (20) peut être chargé dans une borne de charge (21) pour le convoyeur au sol (6).

12. Système de convoyeur au sol monté sur rails selon la revendication 10, **caractérisé en ce que** l'accumulateur d'énergie (20) peut être chargé par induction le long du trajet de déplacement sur les paires de rails (2.1, 2.2).

13. Procédé pour faire fonctionner un système de convoyeur au sol monté sur rails selon l'une des revendications 1 à 12 pendant un changement de direction d'un convoyeur au sol (6) à l'intérieur d'une zone d'intersection (4) d'une première paire de rails (2.1) à une seconde paire de rails (2.2) qui se croisent, à l'aide de la rotation autour d'un axe de rotation (9) de cassettes de roulettes (8) qui sont montées sur le convoyeur au sol (6), par un ensemble d'entraînement en rotation de cassettes de roulettes (3),
**caractérisé en ce qu'**au moins un disque de support (5) non profilé sur sa surface est entraîné en rotation autour un axe vertical (22) par frottement d'une roulette (7) en raison de la rotation de la cassette de roulettes (8).

14. Procédé selon la revendication 13, **caractérisé en ce qu'**il existe un coefficient de frottement pour le frottement statique supérieur à 0,07, de préférence supérieur à 0,13, pour l'appariement entre la périphérie extérieure de la roulette (7) et la surface (14) du disque de support (5).

15. Procédé selon la revendication 13 ou 14, **caractérisé en ce qu'**un ensemble de translation (30) relié au convoyeur au sol (6) agit sur au moins une roulette (7) d'une cassette de roulettes (8) afin de déplacer le convoyeur au sol (6) dans la zone d'intersection (4) et de s'en éloigner.
